Europäisches Patentamt

European Patent Office

Office européen des brevets

(11) Veröffentlichungsnummer: **0 035 738**
**B1**

# (12) EUROPÄISCHE PATENTSCHRIFT

(45) Veröffentlichungstag der Patentschrift:
21.09.83

(21) Anmeldenummer: 81101518.9

(22) Anmeldetag: 03.03.81

(51) Int. Cl.³: **H 02 G 15/013, H 02 G 15/10**

(54) **Kabelmuffe mit Muffenköpfen aus schrumpfbarem Material.**

(30) Priorität: 07.03.80 DE 3008879

(43) Veröffentlichungstag der Anmeldung:
16.09.81 Patentblatt 81/37

(45) Bekanntmachung des Hinweises auf die Patenterteilung:
21.09.83 Patentblatt 83/38

(84) Benannte Vertragsstaaten:
AT BE CH DE FR GB IT LI NL SE

(56) Entgegenhaltungen:
DE-A-2 731 578
DE-B-2 601 811
FR-A-2 339 239
FR-A-2 388 432

(73) Patentinhaber: SIEMENS AKTIENGESELLSCHAFT,
Berlin und München Wittelsbacherplatz 2,
D-8000 München 2 (DE)

(72) Erfinder: Wicek, Rudolf, Dr.Mach-Strasse 101,
D-8013 Haar (DE)

### Kabelmuffe mit Muffenköpfen aus schrumpfbarem Material

Die Erfindung betrifft eine Kabelmuffe mit Muffenköpfen aus wärmeschrumpfbarem Material, welche mindestens eine als Kabeleinführungsstutzen ausgebildete Kabeleinführung mit in Achsrichtung verlaufender Trennfuge entlang einer Mantellinie aufweist, wobei die Ränder dieser Trennfuge, die sich auch über die äussere Muffenkopfwandung erstreckt, als Stege mit Dichtungsflächen ausgebildet sind.

Bei Kabelgarnituren werden vielfach die Kabeleinführungen in gesonderten Stirnbereichen, den sogenannten Muffenköpfen vorgenommen. Eine derartige Kablemuffe wird in der DE-A Nr. 2731578 beschrieben. Sie besteht aus Muffenköpfen, die jeweils mit mindestens einem als Ausstülpung ausgebildeten Kabeleingang versehen sind und die über einen Kunststoffschrumpfschlauch miteinander verbunden bzw. überdeckt werden. Die Muffenköpfe sind nur im Bereich der Kabeleingänge schrumpfbar und weisen einen geteilten Stützmantel auf, mit dem die Verbindungsränder bzw. die Stege entlang der Trennfuge des Muffenkopfes zusammengehalten werden. Das Einlegen eines Kabels in den Kabeleingang erfolgt, besonders bei ungeschnittenen Kabeln, über die aufgeweitete Trennfuge entlang einer Mantellinie der Ausstülpung. Dabei ergeben sich besonders bei grossen Kabeldurchmessern erhebliche Schwierigkeiten, da die Trennfuge nicht beliebig weit auseinandergezogen werden kann. Diese Schwierigkeit erhöht sich, wenn mehrere Kabel im gleichen Muffenrohr eingeführt werden müssen. Ein Aufweiten bzw. Zurückbiegen der Ränder entlang der Trennfugen ist dann kaum mehr möglich. Weiterhin ergeben sich Komplikationen bei der Abdichtung der Trennfuge nahe dem Kabel, da hier die beim Schrumpfen auftretenden Schrumpfkräfte in verstärktem Masse wirksam sind. Dabei werden diese Stegbereiche auseinandergezogen und es kann sich ein Spalt entlang der Trennfuge bilden, der dann zur Undichtigkeit führt.

Die Aufgabe der Erfindung lag nun darin, bei einer Kabelmuffe mit Muffenköpfen aus schrumpfbarem Material, die mit mindestens einem, entlang einer Mantellinie geschlitzten Kabeleinführungsstutzen versehen sind, einen Verschluss für die Trennfuge eines solchen Kabeleinführungsstutzens zu finden, bei dem die durch den Schrumpfvorgang auftretenden Schrumpfkräfte bezüglich der Dichtigkeit im Trennfugenbereich unwirksam bleiben.

Die gestellte Aufgabe wird mit Hilfe einer eingangs erwähnten Kabelmuffe, deren Kabeleinführungsstutzen mit in Achsrichtung verlaufenden Trennfugen versehen sind, dadurch gelöst, dass ein Verschlusseinsatz zwischen den Stegen der Trennfuge angeordnet ist und dass die Ränder der Stege und die Ränder des Verschlusseinsatzes mit gegenseitig ineinander greifenden Profilen versehen sind, derart, dass die Stege mit dem Verschlusseinsatz verhakt sind.

Ein Vorteil der Erfindung ist darin zu schon, dass die Dichtungsbereiche entlang der Trennfuge der Kabeleinführungsstutzen so ausgebildet sind, dass die in Umfangrichtung wirkenden Schrumpfkräfte unwirksam bleiben. Das bedeutet, dass die Ränder der Trennfuge so fixiert sind, dass ein Auseinanderziehen der Stege in Umfangrichtung nicht mehr möglich ist. Dadurch wird die Ausbildung eines Spaltes entlang der Trennfuge und besonders entlang der Mantellinie des Kabels im Bereich der Trennfuge verhindert, so dass die Gefahr zur Undichtigkeit in diesem Bereich behoben ist. Für die Einführung von ungeschnittenen Kabeln in die Kabeleinführungsöffnungen ist von Vorteil, wenn die Trennfuge eine gewisse Breite aufweist, da dadurch ein leichteres Einführen der Kabel ermöglicht wird. Im Rahmen der Erfindung wird nun als Verschluss für eine derart breite Trennfuge ein Verschlusseinsatz eingesetzt, dessen Ränder mit den Rändern der Stege entlang der Trennfuge so fest in Verbindung gebracht werden, dass ein Lösen oder Auseinanderziehen des Verschlussbereiches durch die in Umfangrichtung wirkenden Schrumpfkräfte nicht erfolgen kann.

Eine solche Verbindung der Ränder wird durch die Erfindung gewährleistet, da die Randbereiche der Stege entlang der Trennfuge und des Verschlusseinsatzes ineinander verhakt werden können. Dies wird durch Ausbildung der Ränder entlang der Trennfuge und des Verschlusseinsatzes mit gegenseitig ineinandergreifbaren Profilen erreicht. Diese Profilgestaltung mit hinterschnittenen Randbereichen kann nun in radialer oder in tangentialer Form entlang der Trennfuge bzw. des Verschlusseinsatzes ausgeführt sein. Bei der Ausführung in radialer Richtung wird der Verschlusseinsatz in radialer Richtung von aussen her in die Trennfuge eingesetzt, während der Verschlusseinsatz bei der tangentialen Ausführung vom Ende des Kabeleinführungsstutzens her in die Trennfuge entlang des Kabels eingeschoben wird. Bei beiden Ausführungen sind die Hinterschneidungen gemäss der Erfindung so ausbildet, dass ein Auseinanderziehen der Stege entlang der Trennfuge verhindert wird. Für derartige Profilgestaltungen können die Ränder zum Beispiel mit dreieckförmigen Hinterschneidungen in der Form von sogenannten Schwalbenschwänzen versehen werden, wobei hiermit die radiale wie auch tangentiale Ausführungsform möglich ist. Zum besseren Einsetzen des Verschlusseinsatzes können die mit radial ausgebildeten Hinterschneidungen versehenen Ränder der Stege sowie des Verschlusseinsatzes konisch ausgebildet sein und zwar mit zunehmender Erweiterung von innen nach aussen. Hierdurch kann der Verschlusseinsatz leichtgängig eingeführt werden bis schliesslich der bündige Sitz gewährleistet ist.

Die Profilflächen der Stege werden unter Umständen zusätzlich mit einem Schmelzkleber beschichtet, der während des Wärmeschrumpfvorganges schmilzt. Auf diese Weise ist eine dichte Verbindung zwischen den Rändern der Stege entlang der Trennfuge und den Rändern des Verschlusseinsatzes gewährleistet. Eine weitere Möglichkeit zur Erreichung eines guten und dichtenden Sitzes des Verschlusseinsatzes in der Trennfuge kann dadurch erreicht werden, dass der Verschlusseinsatz aus wärmeschrumpfbarem Material besteht, wobei dieser vor dem Einsetzen in die Trennfuge in erwärmtem Zustand so gereckt wurde, dass er im wieder erkalteten Zustand leichtgängig einsetzbar ist. Während des Schrumpfvorganges, bei dem die Kabeleinführungsstutzen auf die eingeführten Kabel aufgeschrumpft werden, bildet sich die ursprüngliche Form des Verschlusseinsatzes zurück. Hierbei verdickt er sich wieder und verspreizt sich dadurch zwischen den profilierten und hinterschnittenen Rändern der Trennfuge. Da sich bei diesem Vorgang auch die profilierten Ränder des Verschlusseinsatzes verdicken, wird ein guter Passsitz des Verschlusseinsatzes in den Hinterschneidungen der Stege entlang der Trennfuge erreicht. Zusätzlich ergibt sich hierdurch, dass die äusseren Ränder der Stege infolge der Aufdickung des Verschlusseinsatzes gegen die Stützringe in den Muffenköpfen gepresst werden, so dass ein Gegendruck erzeugt wird, durch den die Dichtungsflächen in der Trennfuge noch besser aneinandergedrückt werden. Somit werden im Trennfugenbereich infolge des Schrumpfvorganges auftretende Kräfte überwiegend von einem Stützring übernommen. Die verbleibenden Restkräfte übernehmen schliesslich die profilierten Ränder der Stege entlang der Trennfuge bzw. des Verschlusseinsatzes. Solche Profile können, wie bereits erwähnt, in der Art eines Schwalbenschwanzes ausgeführt sein, dessen Spitzen abgerundet sind. Diese Abrundungen sind besonders dann von Vorteil, wenn Verschlusseinsätze aus wärmeschrumpfbarem Material verwendet werden, da bei der Rückbildung in die ursprüngliche Form ein besserer Ausgleich erfolgen kann als bei Spitzprofilen. Diese Profile können bereits in der Spritzform zur Herstellung für den Muffenkopf eingearbeitet sein oder sie können auch nach dem Spritzvorgang mit Hilfe entsprechender Werkzeuge ausgeschnitten werden. Für die Herstellung eines solchen Muffenkopfes kann als Material Polyäthylen (PE) verwendet werden, das nach dem Spritzvorgang strahlenvernetzt wird. Für die Herstellung der Profile nach dem Spritzvorgang eignet sich besonders peroxydisch vernetztes Material. Hier werden nach dem Spritzvorgang die Profile mit Hilfe eines heissen Werkzeuges ausgeschnitten.

Die Erfindung wird nun anhand von fünf Figuren näher erläutert, wobei

Fig. 1 die Stirnseite und

Fig. 2 die Draufsicht eines Muffenkopfes mit dem erfindungsgemässen Verschlusseinsatz zwischen den Stegen der Trennfuge zeigt.

Fig. 3 vermittel die Stirnansicht eines Muffenkopfes mit zwei Kabeleinführungen.

Fig. 4 zeigt einen Verschlusseinsatz, der in tangentialer Richtung in die Trennfuge eingeführt ist.

Fig. 5 skizziert die Anordnung von drei Kabeleinführungen in der Stirnfläche eines Muffenkopfes.

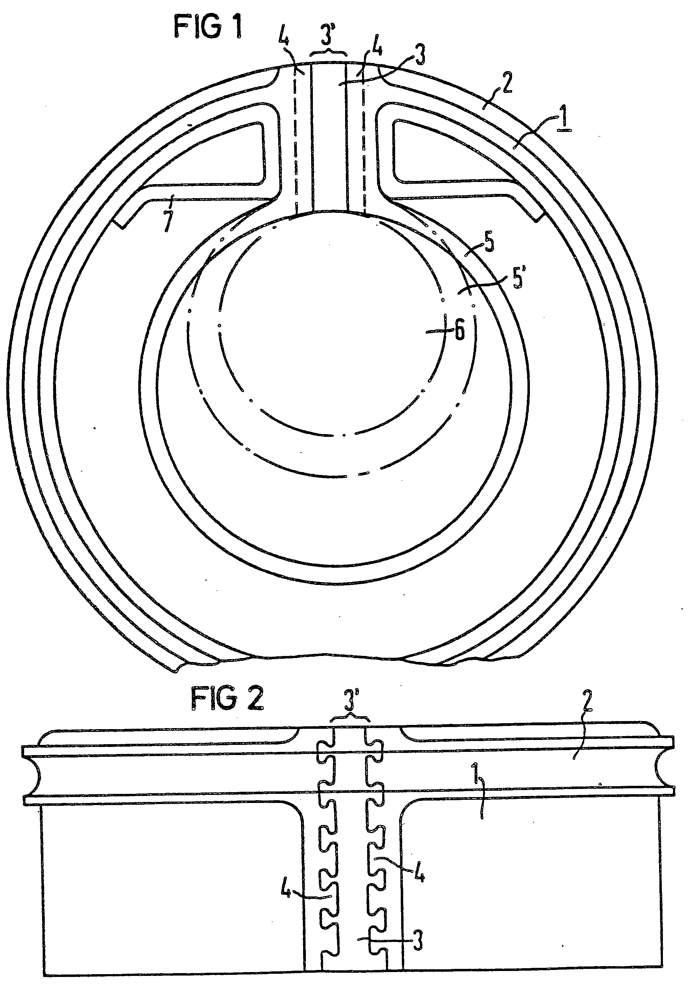

Die Fig. 1 zeigt die Stirnansicht eines Muffenkopfes 1 mit der radial nach aussen gerichteten Trennfuge 3' zwischen der Kabeleinführungsöffnung 6 im Kabeleinführungsstutzen 5 bzw. 5' und der Aussenwandung des Muffenkopfes 1 und mit dem Verschlusseinsatz 3. Weiterhin weist der Muffenkopf 1 an seinem äusseren Umfang eine Dichtungsnut 2 auf, die nach Einlage eines Dichtungsmittels zur Abdichtung gegen ein Muffenrohr dient. Der Muffenkopf 1 selbst ist aus schrumpfbarem Material als zylindrischer Rohrkörper mit einem stirnseitigen kreisförmigen Abschluss ausgebildet, wobei in diesem Beispiel ein einziger Kabeleinführungsstutzen 5 angeordnet ist. Dieser Kabeleinführungsstutzen 5 ist zunächst aufgeweitet und wird nach Einführung des Kabels auf dessen Kabelmantel aufgeschrumpft, zum Beispiel bis auf die Form 5' entsprechend des Kabeldurchmessers. Zur besseren Einführung der Kabel, besonders von ungeschnittenen Kabeln, ist eine radial nach aussen gerichtete Trennfuge 3' vorgesehen, wobei die seitlichen Dichtungsflächen in Form von Stegen ausgebildet sind, die von aussen her an den der Trennfuge 3' abgewandten Seiten von einem Stützring 7 hintergriffen werden. Dieser Stützring 7 ist im Inneren des rohrförmigen Teils des Muffenkopfes 1 angeordnet und gewährleistet diesem sowie den Stegen der Trennfuge den erforderlichen Halt und die erforderliche Formstabilität während des Schrumpfvorganges und danach. Die Ränder 4 der Trennfuge 3' und die hier verdeckten Ränder des Verschlusseinsatzes 3 entlang der Trennfuge 3' sind profiliert ausgeführt und sind gegenseitig verhakt, damit ein Auseinanderziehen der Stege infolge von Schrumpfkräften verhindert wird. In diesem Beispiel ist der Verschlusseinsatz 3 radial von aussen her eingesetzt, so dass die hinterschnittenen Profile in den Rändern 4 ebenfalls radial von innen nach aussen verlaufen.

Die Fig. 2 verdeutlicht nun besonders den Trennfugenbereich mit dem Verschlusseinsatz 3 in der Trennfuge 3'. Dabei ist erkennbar, dass die Ränder 4 der Trennfuge 3' und des Verschlusseinsatzes 3 schwalbenschwanzartige Hinterschneidungen aufweisen, wobei die abstehenden Enden des einen Randes in die Hinterschneidungen des anderen Randes eingreifen. Dies gilt in gegenseitiger Weise, so dass ein Auseinanderziehen dieser Randbereiche durch in Umfangsrichtung wirkende Schrumpfkräfte nicht mehr möglich ist. Die abstehenden Enden, wie auch die korrespondierenden Hinterschneidungen sind senkrecht zur Zeichenebene, also radial nach innen ausgeführt, so dass der Verschlusseinsatz 3 von aussen nach innen einschiebbar ist. Die korrespondierenden, hinterschnittenen Dichtungsflächen der Stege und des Verschlusseinsatzes 3 können nun auch konisch von innen nach aussen sich erweiternd ausgebildet sein, wodurch die Montage erleichtert wird. Der Verschlusseinsatz 3 kann wie oben bereits erwähnt, aus schrumpfbarem, vorgerecktem Material bestehen, der sich dann während des Schrumpfvorganges in seine ursprüngliche Form zurückbildet, die so gewählt ist, dass sich eine Verklemmung im Verschlussbereich ergibt. Hierdurch wird somit ein guter Passsitz erreicht. Eine Beschichtung der profilierten Dichtungsflächen mit Kleber, zum Beispiel mit Schmelzkleber, erhöht die Dichtigkeit und Festigkeit des Verschlusses. Fig. 2 zeigt nun ausserdem sehr deutlich die am äusseren Umfang des rohrförmigen Teils des Muffenkopfes 1 angeordnete Dichtungsnut 2. Nach Einlage einer Dichtungsmasse bzw. Dichtungsschnur kann das eigentliche Muffenrohr aufgezogen werden.

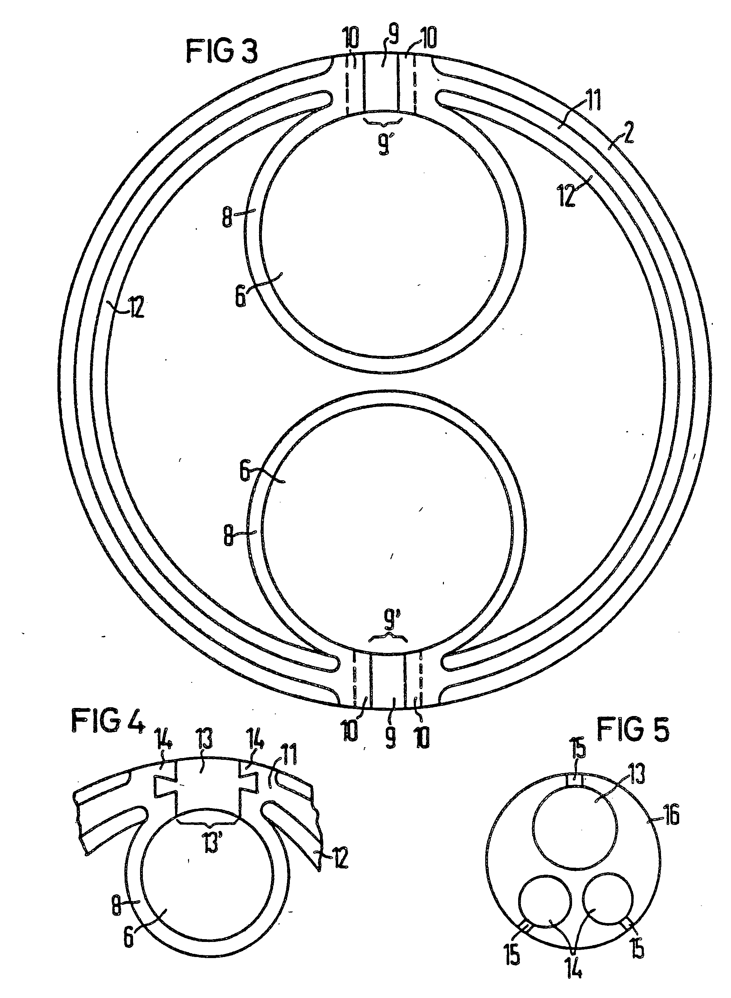

Fig. 3 zeigt die Stirnseite eines Muffenkopfes 11, der ebenfalls am äusseren Umfang eine Dichtungsnut 2 zur Abdichtung gegen ein Muffenrohr aufweist. Hier sind in der Stirnfläche allerdings zwei Kabeleinführungsstutzen 8 mit den Kabeleinführungsöffnungen 6 angeordnet und beide Kabeleinführungsstutzen 8 sind mit Trennfugen 9' versehen, die mit Hilfe von Verschlusseinsätzen 9 gemäss der Erfindung verschlossen und abgedichtet werden. Die Hinterschneidungen der korrespondierenden Ränder 10 der Stege entlang der Trennfuge 9' und die Ränder des Verschlusseinsatzes 9 sind nur angedeutet und können zum Beispiel wie im vorherigen Beispiel ausgebildet sein. Die Stege der Trennfuge 9' werden hier ebenfalls auf den der Trennfuge 9' abgewandten Seiten von einem Stützring 12 hintergriffen, so dass die Formstabilität beim und nach dem Schrumpfen gewährleistet ist. In diesem Fall kann der Stützring 12 auch aus zwei Teilen zusammengesetzt sein.

Durch die Fig. 4 wird erläutert, dass die Ausbildung der Hinterschneidungen in den Rändern 14 der Stege entlang der Trennfuge 13' und des Verschlusseinsatzes 13 in tangentialer Richtung ausgeführt sein können. Hier sind die korrespondierenden Hinterschneidungen in den Rändern 14 von Trennfuge 13' und Verschlusseinsatz 13 so ausgebildet, dass die Einführung des Verschlusseinsatzes 13 in tangentialer Richtung erfolgt, wobei ein Aufziehen des Verschlussbereiches in Umfangrichtung durch das gegenseitige Verhaken der Ränder infolge der Hinterschneidungen ebenfalls nicht möglich ist. Die mit schwalbenschwanzartigen Profilen versehenen Ränder des Verschlusseinsatzes 13 greifen mit ihren verbreiterten, abstehenden Enden in die hinterschnittenen und tangential verlaufenden Nuten der Stege entlang der Trennfuge ein. Eine Beschichtung mit Kleber, zum Beispiel mit Schmelzkleber, erhöht auch hier die Dichtigkeit und Festigkeit des Verschlussbereiches. In dieser Fig. 4 ist nur ein Ausschnitt von einem Muffenkopf 11 dargestellt, der — wie bereits vorher — Kabeleinführungen 6 in Kabeleinführungsstutzen 8 aufweist, wobei die Stege der Trennfuge 13' ebenfalls von einem Stützring 12 abstützend hintergriffen werden. Diese Ausführungsform eignet sich auch für einen Verschlusseinsatz 13 aus vorgerecktem, schrumpfbarem Material, das sich während des Schrumpfvorganges verspreizend in seine ursprüngliche, stärkere Form infolge seines Formgedächtnisses zurückbildet. Durch diese Aufdickung innerhalb der hinterschnittenen Nuten wird wiederum ein gut dichtender Sitz gewährleistet.

Die Fig. 5 zeigt nun lediglich als Ergänzung die Anordnung eines Muffenkopfes 16 mit mehreren Kabeleinführungen 13 und 14, die alle nach aussen gerichtete Trennfugen 15 aufweisen. In diese Trennfugen mit profilierten Rändern lassen sich gemäss der Erfindung die entsprechenden Verschlusseinsätze mit den korrespondierenden Profilen einführen.

## Patentansprüche

1. Kabelmuffe mit Muffenköpfen (1, 11, 16) aus wärmeschrumpfbarem Material, welche mindestens eine als Kabeleinführungsstutzen (5, 8, 13, 14) ausgebildete Kabeleinführung mit in Achsrichtung verlaufender Trennfuge (3', 9', 15) entlang einer Mantellinie aufweist, wobei die Ränder (4, 10, 14) dieser Trennfuge, die sich auch über die äussere Muffenkopfwandung erstreckt, als Stege mit Dichtungsflächen ausgebildet sind, dadurch gekennzeichnet, dass ein Verschlusseinsatz (3, 9, 15) zwischen den Stegen der Trennfuge (3', 9') angeordnet ist und dass die Ränder der Stege (4, 10) und die Ränder der Verschlusseinsatzes (3, 9, 15) mit gegenseitig ineinander greifenden Profilen versehen sind, derart, dass die Stege mit dem Verschlusseinsatz verhakt sind.

2. Kabelmuffe nach Anspruch 1, dadurch gekennzeichnet, dass die Ränder der Stege (4, 10) und die Ränder des Verschlusseinsatzes (3, 9, 15) hinterschnittene Profile aufweisen, wobei die Hinterschneidungen in radialer Richtung ausgeführt sind.

3. Kabelmuffe nach Anspruch 2, dadurch gekennzeichnet, dass die Ränder der Stege (4, 10) und des Verschlusseinsatzes (3, 9, 15) mit Schwalbenschwanzprofilen versehen sind.

4. Kabelmuffe nach einem der vorhergehenden Ansprüche, dadurch gekennzeichnet, dass die Ränder der Stege (4, 10) und des Verschlusseinsatzes (3, 9, 15) von der Kabeleinführungsöffnung (6, 14) zum äusseren Umfang des Muffenkopfes (1) hin konisch erweitert sind, wobei sich die Steigungen der konisch ausgebildeten Ränder der Stege (4, 10) und des Verschlusseinsatzes (3, 9, 15) entsprechen.

5. Kabelmuffe nach einem der Ansprüche 1 bis 2, dadurch gekennzeichnet, dass der Verschlusseinsatz (3, 9, 15) aus schrumpfbarem Material besteht und so vorgereckt ist, dass er zwischen den Rändern der Stege (4, 10) in die Trennfuge (3', 9') leicht einsetzbar ist und erst nach einer Wärmebehandlung dichtenden Sitz erreicht.

6. Kabelmuffe nach einem der Ansprüche 1 bis 5, dadurch gekennzeichnet, dass ein Stützring (7, 12) am inneren Umfang des Muffenkopfrandes (1, 11) angeordnet ist und dass dieser Stützring (7, 12) die Stege (4, 10) der Trennfuge (3', 9') im Dichtungsbereich abstützend hintergreift.

7. Kabelmuffe nach einem der vorhergehenden Ansprüche, dadurch gekennzeichnet, dass die Ränder (4, 10) der Trennfuge (3', 9') und/oder die Ränder des Verschlusseinsatzes (3, 9, 15) mit einem Kleber beschichtet sind.

8. Kabelmuffe nach einem der vorhergehenden Ansprüche, dadurch gekennzeichnet, dass am äusseren Umfang des Muffenkopfes (1) eine Dichtungsnut (2) zur Abdichtung gegen ein Muffenrohr angeordnet ist.

## Revendications

1. Manchon de câble à têtes d'extrémités (1, 11, 16) en un matériau thermorétractable, qui comporte au moins une introduction de câble réalisée sous la forme d'un embout d'introduction de câble (5, 8, 13, 14) à ligne de joint (3', 9', 15) s'étendant axialement le long d'une génératrice, les bords (4, 10, 14) de la ligne de joint qui s'étendent au-delà de la paroi extérieure de la tête d'extrémité du manchon étant formés sous forme de barrettes à surfaces d'étanchéité, caractérisé par le fait qu'un insert de fermeture (3, 9, 15) est disposé entre les barrettes de la ligne de joint (3', 9') et que les bords des barrettes (4, 10) et les bords de l'insert de fermeture (3, 9, 15) sont pourvus de profils s'interpénétrant de manière que les barrettes s'accrochent à l'insert de fermeture.

2. Manchon de câble selon la revendication 1, caractérisé par le fait que les bords des barrettes (4, 10) et les bords de l'insert de fermeture (3, 9, 15) présentent des profils à contre-dépouille, les contre-dépouilles étant réalisées dans la direction radiale.

3. Manchon de câble selon la revendication 2, caractérisé par le fait que les bords des barrettes (4, 10) et de l'insert de fermeture (3, 9, 15) sont pourvus de profils en queue d'aronde.

4. Manchon de câble selon l'une des revendications précédentes, caractérisé par le fait que les bords des barrettes (4, 10) et de l'insert de fermeture (3, 9, 15) sont élargis coniquement de l'ouverture d'introduction du câble (6, 14) à la périphérie de la tête d'extrémité du manchon, les pentes des bords coniques des barrettes (4, 10) et de l'insert de fermeture (3, 9, 15) se correspondant entre elles.

5. Manchon de câble selon l'une des revendications 1 ou 2, caractérisé par le fait que l'insert de fermeture (3, 9, 15) est fait avec un matériau rétractable et préétiré de telle manière qu'il puisse être facilement introduit entre les bords des barrettes (4, 10) et la ligne de joint (3', 9') et n'atteint qu'un siège étanche qu'après un traitement thermique.

6. Manchon de câble selon l'une des revendications 1 à 5, caractérisé par le fait qu'une bague d'appui (7, 12) est disposée contre le pourtour du bord de la tête d'extrémité du manchon (1, 11), et que cette bague d'appui (7, 12) se situe à l'arrière des barrettes (4, 10) de la ligne de joint (3', 9') en s'appuyant dans la partie intéressant l'étanchéité.

7. Manchon selon l'une des revendications précédentes, caractérisé par le fait que les bords (4, 10) de la ligne de joint (3', 9') et/ou les bords de l'insert de fermeture (3, 9, 15) sont garnis d'un adhésif.

8. Manchon selon l'une des revendications précédentes, caractérisé par le fait que sur la périphérie extérieure de la tête d'extrémité du manchon (1) est disposée une gorge d'étanchéité (2) pour assurer l'étanchéité par rapport à un élément tubulaire du manchon.

## Claims

1. A cable sleeve having sleeve heads (1, 11, 16) made of heat-shrinkable material, which have at least one cable entry in the form of a cable entry gland (5, 8, 13, 14) having a separating slot (3', 9', 15) running in the axial direction along a surface line, the boundaries (4, 10, 14) of this separating slot which also extends across the outer wall of the sleeve head being in the form of crosspieces provided with sealing surfaces, characterised in that a sealing insert (3, 9, 15) is arranged between the crosspieces of the separating slot (3', 9') and that the edges of the crosspieces (4, 10) and the edges of the sealing insert (3, 9, 15) are provided with mutually interlocking profiles such that the crosspieces are hooked to the sealing insert.

2. A cable sleeve as claimed in claim 1, characterised in that the edges of the crosspieces (4, 10) and the edges of the sealing insert (3, 9, 15) have undercut profiles, the undercutting extending in the radial direction.

3. A cable sleeve as claimed in claim 2, characterised in that the edges of the crosspieces (4, 10) and of the sealing insert (3, 9, 15) are provided with dovetailed profiles.

4. A cable sleeve as claimed in one of the preceding claims, characterised in that the edges of the crosspieces (4, 10) and of the sealing insert (3, 9, 15) widen conically from the cable entry opening (6, 14) towards the outer periphery of the sleeve head (1), the slopes of the conical edges of the crosspieces (4, 10) and of the sealing insert (3, 9, 15) corresponding to one another.

5. A cable sleeve as claimed in one of claims 1 and 2, characterised in that the sealing insert (3, 9, 15) consists of shrinkable material and is prestretched in such a way that it can easily be inserted into the separating slot (3', 9') between the edges of the crosspieces (4, 10) and does not attain the sealing position until after a heat treatment.

6. A cable sleeve as claimed in one of claims 1 to 5, characterised in that a support ring (7, 12) is arranged on the inner periphery of the edge of the sleeve head (1, 11) and that this support ring (7, 12) engages as a support behind the crosspieces (4, 10) of the separating slot (3', 9') in the sealing region.

7. A cable sleeve as claimed in one of the preceding claims, characterised in that the edges (4, 10) of the separating slot (3', 9') and/or the edges of the sealing insert (3, 9, 15) are coated with an adhesive.

8. A cable sleeve as claimed in one of the preceding claims, characterised in that a sealing groove (2) is arranged at the outer periphery of the sleeve head (1) in order to seal a sleeve tube.

FIG 1

FIG 2

FIG 3

FIG 4

FIG 5